# FASCICULE DE BREVET EUROPEEN

(11) **EP 1 275 466 B1**
(45) Date de publication et mention de la délivrance du brevet: **02.03.2011**
(21) Numéro de dépôt: 02362013.1
(22) Date de dépôt: 09.07.2002
(51) Int. Cl.: B23K 26/38, B29C 70/54, B23K 26/08, G10K 11/172, B64C 1/40

(54) **Procédé de réalisation de trous notamment de micro-perforations dans un matériau composite**
Verfahren zur Herstellung von Löchern, insbesondere Mikro-Perforierungen in einem Verbundwerkstoff
Process for making holes, in particular of micro-perforations in a composite material

(30) Priorité: 12.07.2001 FR 0109294
(43) Date de publication de la demande: 15.01.2003
(73) Titulaire: AIRBUS OPERATIONS (S.A.S), 31060 Toulouse (FR)
(72) Inventeur: Dublineau, Pascal, 49270 Saint Sauveur de Landermont (FR); Buge, Michel, 44230 Saint Sebastien sur Loire (FR); Porte, Alain, 31770 Colomiers (FR)
(74) Mandataire: Maupilier, Didier

(56) Documents cités:
- EP-A- 0 314 353
- US-A- 5 741 456

## Description

La présente invention se rapporte à la fabrication de panneaux d'atténuation acoustique, notamment de panneaux en matériau composite présentant un faible rapport poids-résistance à l'effort, destinés par exemple à équiper l'entrée d'air ou la nacelle d'un moteur d'aéronef.

Conventionnellement, de telles structures sont réalisées en alliage de métaux légers dont une ou plusieurs feuilles sont perforées afin d'obtenir une atténuation acoustique.

La perforation de feuille de métal est réalisée par des techniques connues comme le moulage, le perçage ou encore le poinçonnage.

Jusqu'à présent, l'utilisation de matériau composite, constitué à partir de fibres imprégnées de résine, n'a pas été applicable à la réalisation d'une telle feuille perforée car le perçage ou le poinçonnage de ce type de matériau entraîne la rupture des fibres et donc la perte des qualités de résistance dudit matériau.

Pour réaliser des trous dans un matériau composite sans rupture des fibres qui le composent, il est possible de constituer des passages ou réserves dans le matériau composite avant que celui-ci ne soit imprégné de résine. Le matériau composite "sec" est placé dans un moule dont la partie basse comporte des "aiguilles" propres à se faufiler entre les fibres du matériau composite en les séparant, ce qui permet de ne pas les casser. Une partie intermédiaire permet de maintenir le matériau en place et la partie haute du moule referme le tout. La résine est alors envoyée sous pression dans le moule : elle imprègne les fibres, les aiguilles garantissant la perforation du matériau composite.

Cette méthode nécessite l'achat d'un moule spécifique pour les matériaux composites devant être munis de trous de passage. De plus, la difficulté de démoulage est un problème fréquemment rencontré par les industriels utilisant cette méthode.

Par le document EP 0314353, on connaît une méthode qui a été proposée pour résoudre ce problème de démoulage. Cependant, cette méthode nécessite un outillage spécifique et une mise en oeuvre évitant que le matériau composite ne colle au moule, elle est donc compliquée et coûteuse.

Par ailleurs, le laser est couramment utilisé, y compris dans le domaine des matériaux composites, mais essentiellement pour réaliser des découpes dans toute l'épaisseur d'une peau en matériau composite par exemple, du fait de la propriété du laser de concentrer en un point un très fort niveau de puissance, ce qui inévitablement endommage les fibres et entraîne leur rupture.

La présente invention vise précisément à pallier les divers inconvénients des techniques connues de perforation ou réalisation de trous de passage dans un matériau en feuille en proposant un procédé apte à la réalisation de trous et notamment de micro-perforations dans un matériau composite de manière précise, efficace et sans endommagement des fibres dudit matériau composite.

A cet effet, l'invention a pour objet un procédé de réalisation de trous, notamment de micro-perforations, dans un matériau composite, constitué de fibres minérales ou organiques noyées dans une matrice résineuse, caractérisé en ce qu'il consiste :
- en une étape préalable, à effectuer des tests sur un échantillon du matériau composite à perforer, à l'aide d'un faisceau laser dirigé sensiblement perpendiculairement à la surface dudit échantillon, lesdits tests consistant à régler la durée d'illumination en un endroit déterminé de l'échantillon, ainsi que la focalisation et la puissance dudit faisceau laser, en sorte de confiner la température dans la masse du matériau composite dans une plage de températures à la fois supérieures à la température de décomposition thermique de la résine matricielle et inférieures à la température d'altération des propriétés physiques des fibres, de façon à réaliser l'élimination de la résine sans porter atteinte à l'intégrité physique des fibres, puis,
- à reproduire sur le matériau à traiter, en chaque emplacement de trou ou perforation à réaliser, les conditions de fonctionnement du laser en sorte de constituer dans ledit matériau, audit emplacement, un trou ou passage traversant, consécutif au seul brûlage local de la résine de la matrice du matériau composite.

De préférence, l'étape de reproduction sur le matériau à traiter desdites conditions de fonctionnement du laser est effectuée automatiquement par programmation, d'une part, des paramètres de pilotage du fonctionnement du laser et, d'autre part, du pilotage du déplacement du faisceau laser en regard des divers emplacements de perforation.

Le matériau composite à traiter est constitué par exemple d'une peau formée d'un pli ou plusieurs plis empilés, d'un tissu de fibres pré-imprégnées.

Une telle peau peut constituer avantageusement la couche d'amortissement acoustique d'un panneau d'atténuation acoustique de type à structure sandwich comprenant une âme alvéolaire flanquée, du côté opposé à ladite couche d'amortissement, d'un réflecteur arrière.

Il est facile de perforer, conformément à l'invention, dans une telle couche d'amortissement, le nombre de micro-perforations, dont dépend le taux de surface ouverte, désiré pour une adaptation aux gammes de fréquences sonores à amortir, c'est-à-dire fonction du moteur dans le cas de panneaux pour nacelles. Une telle couche d'amortissement acoustique remplit à la fois une fonction dissipatrice par ses micro-perforations et une fonction structurale par les fibres qui de surcroît sont intactes et assurent le passage des efforts.

La couche résistive du panneau ainsi constituée présente un rapport faible poids-résistance à l'effort véritablement optimal, très inférieur à celui des couches résistives à propriété dissipatrice équivalente connues constituées d'un tissu métallique, d'une feuille métallique perforée, ou de deux couches, l'une structurale et l'autre poreuse et dissipatrice, superposées.

L'invention a également pour objet un dispositif de mise en oeuvre du procédé ci-dessus et plus particulièrement de mise en oeuvre de la phase industrielle, c'est-à-dire la reproduction sur le matériau composite à traiter, aux endroits désirés, des conditions de fonctionnement du laser déterminées dans la phase préalable de tests.

Un tel dispositif utilise un laser de caractéristiques appropriées et est caractérisé en ce qu'il comprend des moyens de pilotage de la puissance et de la focalisation du laser, des moyens de pilotage du déplacement relatif entre la tête du laser et le matériau à traiter, constitué d'au moins une nappe tissée, dans au moins deux directions orthogonales parallèles au plan de ladite nappe et des moyens informatiques de commande desdits moyens de pilotage suivant un programme préétabli.

D'autres caractéristiques et avantages de l'invention ressortiront de la description qui va suivre d'un mode de mise en oeuvre du procédé défini plus haut, description donnée à titre d'exemple uniquement et en regard du dessin annexé sur lequel :
- la figure 1 est une vue en coupe schématique d'un matériau composite classique non usiné ;
- la figure 2 représente le matériau de la figure 1 après usinage conformément au procédé de l'invention, et
- la figure 3 est un schéma représentant un dispositif apte à effectuer l'usinage illustré par la figure 2.

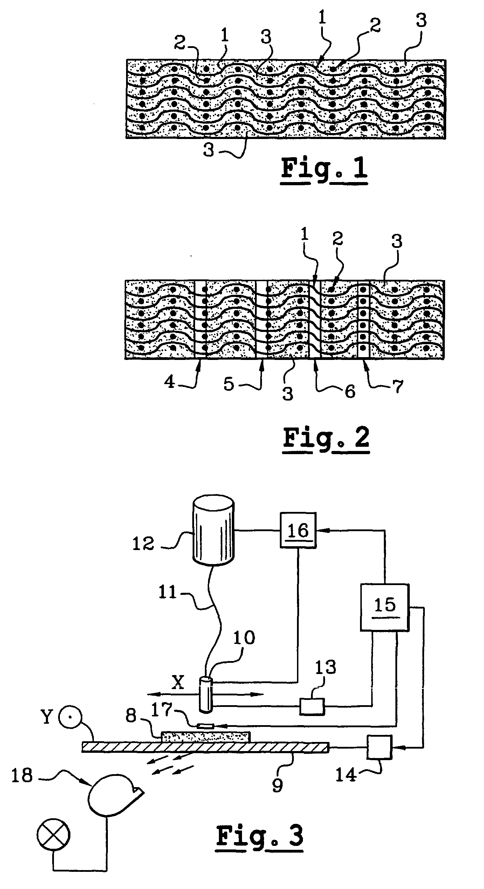

La figure 1 représente un bloc de matériau composite formé à partir d'un empilage de tissus constitués de fibres pré-imprégnées d'une résine appropriée.

Par fibres, on entend un ensemble, de section carrée, ronde ou rectangulaire, de fils, de bandes de fils, de mèches, de tresses ou de brins de fils, de différente nature, par exemple du carbone, du verre, du nylon ou du "Kevlar", pourvu que les fibres se calcinent à une température supérieure à la température de fusion de la résine.

La résine d'imprégnation des fibres est de préférence une résine thermoplastique mais le procédé de l'invention peut éventuellement être appliqué à des matériaux composites à résine thermodurcissable.

Le matériau composite de la figure 1 est représenté en coupe après polymérisation ou consolidation de la résine d'imprégnation et comprend un empilage de tissus formés de fibres de chaîne 1 et de fibres de trame 2, noyées dans une matrice résineuse 3.

Sur la figure 2, on a représenté respectivement en 4, 5, 6 et 7 des trous de passage ou perforations traversant toute l'épaisseur du bloc de matériau composite, perpendiculairement au plan des tissus empilés (1,2).

Conformément à l'invention, ces passages traversants sont réalisés à l'aide d'un laser dont l'action thermique est contrôlée en sorte de modifier ponctuellement les caractéristiques d'adhésion de la résine 3, autrement dit en amenant localement la température du matériau composite au-dessus de la température de décomposition ou pyrolyse de la résine, qui est de l'ordre de 350 à 450 °C en atmosphère oxydante, selon les types de résine, tout en demeurant notablement en deçà de la température susceptible d'altérer les propriétés physiques des fibres, en particulier la température de calcination.

Cette température de calcination des fibres est nettement supérieure à celle de pyrolyse des résines usuelles et est par exemple de l'ordre de 1500 °C pour les fibres de carbone.

Une régulation de la puissance du laser pour qu'en tous points de la masse du matériau composite, où se manifestent les effets du laser, la température locale maximale atteinte soit cantonnée dans une plage de températures sensiblement supérieures à la température de pyrolyse de la résine inter-fibres tout en demeurant largement en deçà des températures d'atteinte à l'intégrité des fibres, est donc possible. Ainsi, par application d'un faisceau laser sensiblement perpendiculairement à l'une des faces du matériau composite, en focalisant correctement ledit faisceau, on réalise dans la masse du matériau composite lesdits passages en forme de puits (4 à 7) approximativement cylindriques, constitués par enlèvement de la résine (3), seules les fibres (1,2), intactes, subsistant à l'intérieur et/ou sur les flancs desdits passages.

Du fait que les fibres (1,2) ne sont pas rigoureusement alignées et rectilignes, que le tissage n'est pas absolument régulier et que ses caractéristiques peuvent varier d'un matériau composite à un autre, que le diamètre des perforations à réaliser peut varier et que la position de l'axe du faisceau laser est aléatoire par rapport aux mailles des tissus, la géométrie des perforations (4 à 7) pourra être très variable d'une perforation à l'autre, une perforation pourra être, comme illustré par la figure 2, plus encombrée qu'une autre par des fibres dénudées, non dégradées, l'essentiel étant que la continuité du passage soit assurée d'une face à l'autre du matériau composite et que le taux global de surface ouverte du matériau composite ainsi perforé corresponde aux caractéristiques acoustiques recherchées, ceci se mesurant facilement à l'aide d'un banc de résistance à l'écoulement de l'air.

Les perforations (4 à 7) ont une section de l'ordre de quelques millimètres carrés et sont par exemple approximativement cylindriques et d'un diamètre entre 2 et 3 mm, ou encore de section carrée ou rectangulaire (3mm x 2mm par exemple).

La figure 3 représente schématiquement un dispositif apte à la mise en oeuvre du procédé de l'invention sur un matériau composite 8 constitué par une peau plane consolidée formée d'un ou plusieurs plis formés chacun d'un tissu de fibres imprégnées d'une résine thermoplastique.

La peau 8 est posée sur une table d'usinage 9 d'une machine à commande numérique par exemple.

Au dessus de la table 9 est montée une tête laser 10 d'axe vertical reliée par une fibre optique 11 à une source laser 12, par exemple de type Yag.

La tête laser 10 est mobile horizontalement en X sous l'action de moyens symbolisés en 13, cependant que la table 9 est mobile horizontalement en Y, c'est-à-dire perpendiculairement au plan de la figure 3, sous l'action de moyens symbolisés en 14.

Les moyens de déplacement 13 et 14 sont commandés, contrôlés et synchronisés à l'aide de moyens informatiques à commande par programme 15, également reliés, d'une part, à des moyens 16 de pilotage de la puissance du laser 12 et de focalisation du faisceau de la tête 10 et, d'autre part, à des moyens symbolisés en 17 de commande du balayage du faisceau laser.

Avantageusement, en dessous de la table 9, qui est une grille métallique par exemple, est disposé un système 18 d'aspiration des gaz et résidus de la pyrolyse générés par le brûlage de la résine du matériau composite.

Le procédé de l'invention comporte une phase préalable de détermination des paramètres opératoires d'usinage, à savoir la puissance instantanée du laser, la focalisation du faisceau, éventuellement le balayage du faisceau lorsque le diamètre du faisceau est inférieur à la taille de la perforation à réaliser et la durée d'illumination du matériau composite par le faisceau laser.

A cet effet, aux lieu et place de la peau 8, on va mettre sur la table 9 un échantillon de la peau et on va effectuer une série d'essais jusqu'à l'obtention de perforations remplissant les conditions, à savoir élimination complète localement de la résine sans atteinte de l'intégrité physique des fibres présentes.

Les paramètres utiles étant enregistrés pour chaque essai, on prendra en compte ceux correspondant aux essais concluants et on programmera ces paramètres dans le système informatique 15, de même que les déplacements de la table 9 et de la tête 10 pour réaliser le nombre de perforations nécessaires dans la peau 8, fonction des gammes de fréquences sonores à amortir.

La peau 8 à usiner est alors mise en place sur la table 9 et la machine va automatiquement réaliser lesdites perforations.

De préférence, le laser utilisé sera un laser à mode pulsé, plus pratique à piloter qu'un laser en continu.

La durée d'illumination de chaque emplacement de la peau 8 est de l'ordre de quelques secondes et il est possible sans problème de perforer des peaux d'une épaisseur pouvant atteindre quelques millimètres.

S'agissant d'un matériau composite à résine thermoplastique, il est aisé de réaliser sur une peau 8 plane les perforations nécessaires, puis d'assembler cette peau avec les autres constituants, âme alvéolaire et réflecteur arrière, dans un moule approprié dans les conditions habituelles de polymérisation des résines de liaison dont la température de fusion, de l'ordre de 180 °C, est inférieure à la température de fusion, de l'ordre de 280 °C, des résines thermoplastiques habituelles. Les perforations réalisées au préalable dans la couche d'atténuation acoustique, constituée par ladite peau perforée, ne seront pas bouchées par la résine de la peau au cours de la réalisation du panneau.

Il est ainsi possible de ne réaliser les perforations dans la peau 8 qu'au moment de la fabrication du panneau, l'adaptation acoustique de la peau pouvant ainsi être ajustée aux caractéristiques attendues du panneau, fonction de l'endroit où il sera monté et de son environnement, ce qui donne beaucoup de souplesse au procédé. Par exemple, pour des entrées d'air de mêmes dimensions destinées à des moteurs de caractéristiques différentes, on pourra réaliser des panneaux avec des couches d'atténuation acoustique de structure identique et différant simplement par le nombre, voire la morphologie et la distribution, des perforations.

La peau 8 usinée conformément à l'invention peut être utilisée seule ou en association dans toute autre structure d'atténuation acoustique de type sandwich ou multicouches.

Le procédé de l'invention peut également être mis en oeuvre sur des matériaux composites à résine thermodurcissable, bien que l'opération soit un peu plus délicate du fait que les perforations ne pourront être réalisées que sur une peau ou couche en forme, une fois réalisé l'assemblage des divers constituants du panneau acoustique. Il faut en effet réaliser lesdites perforations après la dernière opération de chauffe en autoclave de l'assemblage, sinon les perforations risqueraient d'être bouchées lors du passage en autoclave. Cela nécessite donc un outillage particulier permettant de piloter le laser sur une pièce en forme.

Le procédé de l'invention permet de réaliser dès panneaux d'atténuation acoustique à couche résistive unique ne nécessitant pas l'adjonction d'une couche structurale puisque ladite couche résistive unique joue à la fois le rôle de dissipation acoustique et celui de renfort structural et, ce, avec une épaisseur de couche pouvant être réduite au minimum, c'est-à-dire assurant véritablement un rapport poids-résistance à l'effort extrêmement réduit.

Une couche résistive selon l'invention est enfin, outre le poids, plus intéressante qu'une couche résistive constituée d'un simple tissu ou feuille métallique sur d'autres points.

La couche selon l'invention uniquement en matériau composite permet d'avoir une bonne homogénéité d'un panneau dont les autres constituants sont en des matériaux identiques ou compatibles, car le collage ou assemblage de ces divers constituants sera de bonne qualité.

Comme le panneau est réalisé avec des matériaux identiques ou compatibles, on évite les problèmes de corrosion, de couples galvaniques et de dilatation thermique différentielle, donc pas de risque de cassure ou de pli.

Enfin, la réparation d'un tel panneau est plus facile que la réparation d'un panneau utilisant un tissu métallique, en effet, une rustine de matériau composite est plus facile à coller sur un matériau composite à réparer qu'une rustine de tissu métallique sur un tissu métallique à réparer.

## Revendications

1. Procédé de réalisation de trous (4 à 7) au moyen d'un laser comportant une tête, notamment de microperforations, dans un matériau composite, constitué de fibres (1,2) minérales ou organiques noyées dans une matrice résineuse (3), **caractérisé en ce qu'**il consiste :
- en une étape préalable, à effectuer des tests sur un échantillon du matériau composite à perforer, à l'aide d'un faisceau laser dirigé sensiblement perpendiculairement à la surface dudit échantillon, lesdits tests consistant à régler la durée d'illumination en un endroit déterminé de l'échantillon, ainsi que la focalisation et la puissance dudit faisceau laser de la tête, en sorte de confiner la température dans la masse du matériau composite dans une plage de températures à la fois supérieures à la température de décomposition thermique de la résine matricielle (3) et inférieures à la température d'altération des propriétés physiques des fibres (1,2), de façon à réaliser l'élimination de la résine sans porter atteinte à l'intégrité physique des fibres, puis,
- à reproduire sur le matériau à traiter, en chaque emplacement de trou ou perforation à réaliser, les conditions de fonctionnement du laser (10,12) en sorte de constituer dans ledit matériau, audit emplacement, un trou ou passage traversant, consécutif au seul brûlage local de la résine de la matrice du matériau composite.

2. Procédé suivant la revendication 1, **caractérisé en ce que** l'étape de reproduction sur le matériau à traiter desdites conditions de fonctionnement du laser (10,12) est effectuée automatiquement par programmation, d'une part, des paramètres de pilotage du fonctionnement du laser et, d'autre part, du pilotage du déplacement du faisceau laser en regard des divers emplacements de perforation.

3. Procédé suivant la revendication 1 ou 2, **caractérisé en ce que** dans l'étape de reproduction sur le matériau à traiter desdites conditions de fonctionnement du laser (10,12), le faisceau de ce dernier est soumis à un balayage de l'emplacement où doit être réalisé une perforation.

4. Procédé suivant la revendication 2 ou 3, des moyens (16) de pilotage de la puissance et de la focalisation du laser, des moyens (13,14) de pilotage du déplacement relatif entre la tête du laser (10) et le matériau à traiter, constitué d'au moins une nappe tissée (8), dans au moins deux directions orthogonales (X,Y) parallèles au plan de ladite nappe (8).

5. Procédé suivant la revendication 4, **caractérisé en ce que** le laser comporte une tête (10) reliée par fibre optique (11) à une source laser (12), ladite tête (10) étant mobile au-dessus du matériau composite (8) à traiter, suivant une première direction (X), cependant que ledit matériau composite (8) est placé sur une table (9) mobile suivant une seconde direction (Y) orthogonale à la première (X).

6. Procédé suivant la revendication 4 ou 5, **caractérisé en ce que** le laser est équipé de moyens (17) de déviation du faisceau laser le laser, lesdits moyens de déviation étant reliés au système informatique (15).

7. Procédé suivant l'un des revendications 1 à 7, **caractérisé en** la mise en oeuvre de moyens (18) d'aspiration des gaz et résidus de pyrolyse de la résine du matériau composite au moyen d'un système (18) d'aspiration des gaz et résidus disposé en dessous de la table (9).

## Claims

1. A method of producing holes (4 to 7) by means of a laser comprising a head, in particular microperforations, in a composite material, consisting of mineral or organic fibres (1, 2) embedded in a resinous matrix (3), **characterised in that** it comprises:
- in a preliminary step, performing tests on a sample of the composite material to be perforated, by means of a laser beam directed substantially perpendicular to the surface of said sample, said tests comprising adjusting the duration of illumination at a given point on the sample, and the focusing and power of said laser beam of the head, so as to confine the temperature in the mass of the composite material within a range of temperatures both higher than the thermal decomposition temperature of the matrix resin (3) and lower than the temperature altering the physical properties of the fibres (1, 2), so as to eliminate the resin without impairing the physical integrity of the fibres, and then
- reproducing, on the material to be treated, at each location of a hole or perforation to be produced, the operating conditions of the laser (10, 12) so as to form, in said material, at said location, a through hole or passage, following the local burning of the resin of the matrix of the composite material.

2. Method according to claim 1, **characterised in that** the step of reproducing, on the material to be treated, said operating conditions of the laser (10, 12) is performed automatically by programming firstly the control parameters for the operation of the laser and secondly the control of the movement of the laser beam facing the various perforation locations.

3. Method according to claim 1 or 2, **characterised in that**, in the step of reproducing, on the material to be treated, said operating conditions of the laser (10, 12), the beam of the latter is subjected to a sweeping of the location where a perforation is to be produced.

4. Method according to claim 2 or 3, in which a laser (10, 12) has suitable characteristics, means (16) of controlling the power and focusing of the laser, means (13, 14) of controlling the relative movement between the head of the laser (10) and the material to be treated, comprising at least one woven cloth (8), in at least two orthogonal directions (X, Y) parallel to the plane of said cloth (8).

5. Method according to claim 4, **characterised in that** the laser comprises a head (10) connected by optical fibre (11) to a laser source (12), said head (10) being movable above the composite material (8) to be treated, in a first direction (X), whereas said composite material (8) is placed on a table (9) movable in a second direction (Y) orthogonal to the first (X).

6. Method according to claim 4 or 5, **characterised in that** the laser is equipped with means (17) of diverting the laser beam, said diversion means being connected to a computer system (15).

7. Method according to one of claims 1 to 6, **characterised in** the use of means (18) of aspirating the gases and residues from the pyrolysis of the resin of the composite material is performed by means of a system (18) for aspirating the gases and residues disposed below the table (9).

## Patentansprüche

1. Verfahren zum Ausbilden von Löchern (4, 7) mittels eines Lasers, der einen Kopf aufweist, insbesondere von Mikroperforationen in einem Verbundmaterial, das aus mineralischen oder organischen Fasern (1, 2) gebildet ist, die in einen harzartigen Grundstoff (3) getaucht sind, **dadurch gekennzeichnet, dass** es darin besteht:
- in einem vorausgehenden Schritt an einer Probe des zu perforierenden Verbundmaterials mit Hilfe eines Laserstrahlenbündels, das im Wesentlichen senkrecht zu der Oberfläche der Probe orientiert ist, Tests auszuführen, wobei die Tests darin bestehen, die Beleuchtungsdauer an einer bestimmten Stelle der Probe sowie die Fokussierung und die Leistung des Laserstrahlenbündels des Kopfes in der Weise zu regeln, dass die Temperatur in der Masse des Verbundmaterials auf einen Bereich von Temperaturen eingeschränkt ist, die zugleich höher als die Temperatur für die thermische Zerlegung des Grundstoffharzes (3) und niedriger als die Temperatur für die Veränderung der physikalischen Eigenschaften der Fasern (1, 2) sind, so dass die Entfernung des Harzes erfolgt, ohne dass die physikalische Integrität der Fasern beeinträchtigt wird, dann
- auf dem zu behandelnden Material an jedem Ort eines zu verwirklichenden Lochs oder einer zu verwirklichenden Perforation die Betriebsbedingungen des Lasers (10, 12) zu reproduzieren, derart, dass in dem Material nach dem einzigen lokalen Verbrennen des Harzes des Grundstoffs des Verbundmaterials an dem Ort ein Durchgangsloch oder Durchgangskanal gebildet wird.

2. Verfahren nach Anspruch 1, **dadurch gekennzeichnet, dass** der Schritt des Reproduzierens der Betriebsbedingungen des Lasers (10, 12) auf dem zu behandelnden Material durch Programmierung einerseits von Betriebssteuerparametern des Lasers und andererseits durch Steuerung der Verlagerung des Laserstrahlenbündels in Bezug auf verschiedene Perforationsorte automatisch ausgeführt wird.

3. Verfahren nach Anspruch 1 oder 2, **dadurch gekennzeichnet, dass** der Schritt des Reproduzierens der Betriebsbedingungen des Lasers (10, 12) auf dem zu behandelnden Material das Strahlenbündel dieses Letzteren dazu veranlasst, den Ort, an dem eine Perforation verwirklicht werden soll, zu überstreichen.

4. Verfahren nach Anspruch 2 oder 3, in dem ein Laser (10, 12) geeignete Eigenschaften, Mittel (16) zum Steuern der Leistung und der Fokussierung des Lasers und Mittel (13, 14) zum Steuern der relativen Verlagerung zwischen dem Kopf des Lasers (10) und dem zu behandelnden Material, das aus wenigstens einer gewebten Lage (8) gebildet ist, in wenigstens zwei zueinander senkrechten Richtungen (X, Y) parallel zur Ebene der Lage (8) umfasst.

5. Verfahren nach Anspruch 4, **dadurch gekennzeichnet, dass** der Laser einen Kopf (10) aufweist, der durch eine Lichtleitfaser (11) mit einer Laserquelle (12) verbunden ist, wobei der Kopf (10) über dem zu behandelnden Verbundmaterial (8) längs einer ersten Richtung (X) beweglich ist, während das Verbundmaterial (8) auf einem Tisch (9), der längs einer zweiten Richtung (Y) senkrecht zu der ersten Richtung (X) beweglich ist, angeordnet ist.

6. Verfahren nach Anspruch 4 oder 5, **dadurch gekennzeichnet, dass** der Laser mit Mitteln (17) zum Ablenken des Laserstrahlenbündels ausgerüstet ist, wobei die Ablenkmittel mit dem Datenverarbeitungssystem (15) verbunden sind.

7. Verfahren nach einem der Ansprüche 1 bis 7, **gekennzeichnet durch** die Benutzung von Mitteln (18) zum Ansaugen der Gase und Reste der Pyrolyse des Harzes des Verbundmaterials mittels eines Systems (18) zum Ansaugen der Gase und Reste, das unter dem Tisch (9) angeordnet ist.
